# EUROPEAN PATENT SPECIFICATION

(11) **EP 0 864 826 B1**
(45) Date of publication and mention of the grant of the patent: **25.09.2002**
(21) Application number: 97119337.0
(22) Date of filing: 05.11.1997
(51) Int. Cl.: F25B 41/06

(54) **Expansion valve**
Entspannungsventil
Vanne de détente

(30) Priority: 11.03.1997 JP 5601597
(43) Date of publication of application: 16.09.1998
(73) Proprietor: Fujikoki Corporation, Tokyo (JP)
(72) Inventor: Yano, Masamichi, Setagaya-ku, Tokyo (JP); Watanabe, Kazuhiko, Setagaya-ku, Tokyo (JP)
(74) Representative: Modiano, Guido, Dr.-Ing.

(56) References cited:
- EP-A- 0 836 031
- DE-A- 3 819 114
- GB-A- 762 232
- US-A- 5 040 905
- US-A- 5 361 597

## Description

### Technical Field of the Invention

The present invention relates to expansion valves and, more particularly, to expansion valves used for refrigerant utilized in refrigeration cycles of air conditioners, refrigeration devices and the like.

### Background of the Invention

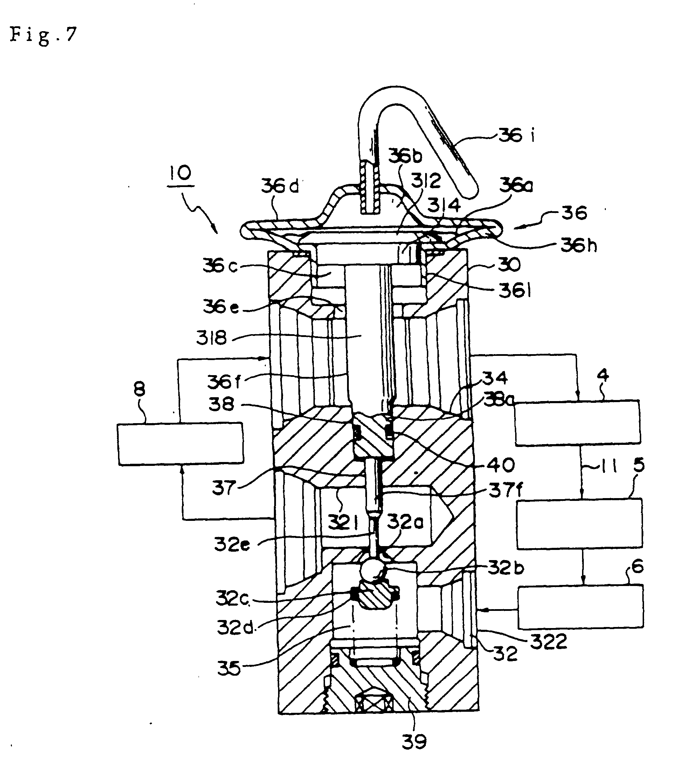

In the prior art, these kinds of thermal expansion valves were used in refrigeration cycles of air conditioners in automobiles and the like. FIG. 7 shows a prior art thermal expansion valve in cross-section together with an explanatory view of the refrigeration cycle. The thermal expansion valve 10 includes a valve body 30 formed of prismatic-shaped aluminum comprising a refrigerant duct 11 of the refrigeration cycle having a first path 32 and a second path 34, the one path placed above the other with a distance inbetween. The first path 32 is for a liquid-phase refrigerant passing through a refrigerant exit of a condenser 5 through a receiver 6 to a refrigerant entrance of an evaporator 8. The second path 34 is for a gas phase refrigerant passing through the refrigerant exit of the evaporator 8 toward a refrigerant entrance of a compressor 4.

An orifice 32a for the adiabatic expansion of the liquid refrigerant supplied from the refrigerant exit of the receiver 6 is formed on the first path 32, and the fist path 32 is connected to the entrance of the evaporator 8 via the orifice 32a and a path 321. The orifice 32a has a center line extending along the longitudinal axis of the valve body 30. A valve seat is formed on the entrance of the orifice 32a, and a valve means 32b supported by a valve member 32c and forming a valve structure together with the valve seat is included thereto. The valve means 32b and the valve member 32c are welded and fixed together. The valve member 32c is fixed onto the valve means 32b and is also forced by a spring means 32d, for example, a compression coil spring.

The first path 32 where the liquid refrigerant from receiver 6 is introduced is a path of the liquid refrigerant, and is equipped with an entrance port 322 and a valve room 35 connected thereto. The valve room 35 is a room with a floor portion formed on the same axis of the center line of the orifice 32a, and is sealed by a plug 39.

Further, in order to supply drive force to the valve body 32b according to an exit temperature of the evaporator 8, a small hole 37 and a large hole 38 having a greater diameter than the hole 37 is formed on said center line axis perforating through the second path 34. A screw hole 361 for fixing a power element member 36 working as a heat sensor is formed on the upper end of the valve body 30.

The power element member 36 is comprised of a stainless steel diaphragm 36a, an upper cover 36d and a lower cover 36h each defining an upper pressure activate chamber 36b and a lower pressure activate chamber 36c divided by said diaphragm and forming two sealed chambers above and under the diaphragm 36a, and a tube 36i for enclosing a predetermined refrigerant working as a diaphragm driver liquid into said upper pressure activate chamber, and is fixed to the valve body 30 by a screw 361. Said lower pressure activate chamber 36c is connected to said second path 34 via a pressure hole 36e formed to have the same center as the center line axis of the orifice 32a. A refrigerant vapor from the evaporator 8 is flown through the second path 34. The second path 34 is a path for gas phase refrigerant, and the pressure of said refrigerant vapor is added to said lower pressure activate chamber 36c via the pressure hole 36e.

Further, inside the lower pressure activate chamber 36c is a heat sensing shaft 36f and an activating shaft 37f made of stainless steel. The heat sensing shaft 36f exposed horizontally inside the second path 34 is slidably positioned through the second path 34 inside the large hole 38 and contacting the diaphragm 36a so as to transmit the refrigerant exit temperature of the evaporator 8 to the lower pressure activate chamber 36c, and to provide driving force in response to the displacement of the diaphragm 36a according to the pressure difference between the upper pressure activate chamber 36b and the lower pressure activate chamber 36c by moving inside the large hole 38. The activating shaft 37f is slidably positioned inside the small hole 37 and provides pressure to the valve means 32b against the spring force of the spring means 32d according to the displacement of the heat sensing shaft 36f. The heat sensing shaft 36f comprises a stopper portion 312 having a large diameter and working as a receive member of the diaphragm 36a, the diaphragm 36a positioned to contact its surface, a large diameter portion 314 contacting the lower surface of the stopper portion 312 at one end surface and being slidably inserted inside the lower pressure activate chamber 36c, and a heat sensing portion 318 contacting the other end surface of said large diameter portion 314 at one end surface and having the other end surface connected to the activating shaft 37f.

Further, the heat sensing shaft 36f is equipped with an annular sealing member, for example, an o-ring 36g, for securing the seal of the first path 32 and the second path 34. The heat sensing shaft 36f and the activating shaft 37f are positioned so as to contact each other, and activating shaft 37f also contacts the valve means 32b. The heat sensing shaft 36f and the activating shaft 37f form a valve driving shaft or rod member together.

In the above explained structure of a thermal expansion valve, a known diaphragm driving liquid is filled inside the upper pressure activating chamber 36b placed above an upper cover 36d, and the heat of the refrigerant vapor from the refrigerant exit of the evaporator 8 flowing through the second path 34 via the diaphragm 36a and the valve driving shaft exposed to a pressure hole 36e connected to the first path 32 and the second path 34 is transmitted to the diaphragm driving liquid.

The diaphragm driving liquid inside the upper pressure activate chamber 36b adds pressure to the upper surface of the diaphragm 36a by turning into gas in correspondence to said heat transmitted thereto. The diaphragm 36a is displaced in the upper and lower direction according to the difference between the pressure of the diaphragm driving gas added to the upper surface thereto and the pressure added to the lower surface thereto.

The displacement of the center portion of the diaphragm 36a to the upper and lower direction is transmitted to the valve member 32b via the valve member driving shaft and moves the valve member 32b close to or away from the valve seat of the orifice 32a. As a result, the refrigerant flow rate is controlled.

That is, the gas phase refrigerant temperature of the exit side of the evaporator 8 is transmitted to the upper pressure activate chamber 36b, and according to said temperature, the pressure inside the upper pressure activate chamber 36b changes, and the exit temperature of the evaporator 8 rises. When the heat load of the evaporator rises, the pressure inside the upper pressure activate chamber 36b rises, and accordingly, the heat sensing shaft 36f or valve member driving shaft is moved to the downward direction and pushes down the valve means 32b via the activating shaft 37, resulting in a wider opening of the orifice 32a. This increases the supply rate of the refrigerant to the evaporator, and lowers the temperature of the evaporator 8. In reverse, when the exit temperature of the evaporator 8 decreases and the heat load of the evaporator decreases, the valve means 32b is driven in the opposite direction, resulting in a smaller opening of the orifice 32a. The supply rate of the refrigerant to the evaporator decreases, and the temperature of the evaporator 8 rises.

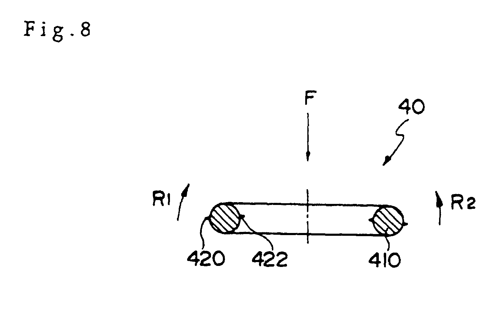

In the thermal expansion valve explained above, an o-ring 40 is utilized as a sealing member, and the enlarged cross-sectional view of the o-ring 40 is shown in FIG. 8. In the drawing, o-ring 40 is formed by molding a rubber material such as silicon rubber into a ring shape, and the cross-sectional surface 410 has a round shape and is filled.

The mold used to form the o-ring is comprised of an upper mold and a lower mold each corresponding to the upper and lower half of the o-ring. Therefore, seams 420 and 422 corresponding to the matching portion of the upper and lower molds will be formed on the outer and inner peripheral of the ring.

When inserting said o-ring to the large hole 38 of the thermal expansion valve 10 in the arrow F direction, the outer seam 420 will be rubbed against the wall surface 38a of the hole 38, and a torsion stress shown by arrows R₁ and R₂ is added to the o-ring 40, resulting in a torsion of the o-ring. When such torsion occurs in the o-ring, the effect as a seal member will decrease, causing problems such as leakage.

Further, the seams 420 and 422 of the o-ring exist in the sealing portion, so it may cause leakage and other problems.

Even further, the rubbing resistance when utilizing the o-ring 40 as the seal member is too large.

Therefore, the object of the present invention is to provide a thermal expansion valve with the above problems solved.

### Summary of the Invention

In order to solve the problem, the thermal expansion valve of the present invention comprises the features defined in claim 1.

The thermal expansion valve having the above structure includes an x-ring working as a seal member mounted on the rod member for controlling the opening of the valve by driving the valve means, so the torsion and deformation of the sealing member could be prevented, and the occurrence of leakage as a result could also be prevented.

Advantageously, there is no seam formed on the sealing member or x-ring, so occurrence of leakage could be prevented.

Further, the resistance between the x-ring and the corresponding member could be reduced.

### Brief Description of the Drawing

In the drawing:
FIG. 1 is a vertical cross-sectional view showing one embodiment of a thermal expansion valve not falling within the scope of the present invention;
FIG. 2 is a cross-sectional view of the x-ring explaining the embodiment of FIG. 1;
FIG. 3 is a vertical cross-sectional view showing an embodiment of the thermal expansion valve of the present invention;
FIG. 4 is a cross-sectional view of the main portion of the embodiment of FIG. 3;
FIG. 5 is a vertical cross-sectional view showing another embodiment of a thermal expansion valve not falling within the scope of the present invention;
FIG. 6 is a vertical cross-sectional view showing yet another embodiment of a thermal expansion valve not falling within the scope of the present invention;
FIG. 7 is a vertical cross-sectional view showing the structure of a prior art thermal expansion valve; and
FIG. 8 is a cross-sectional view of the o-ring explaining the structure of FIG. 7.

### Detailed Description

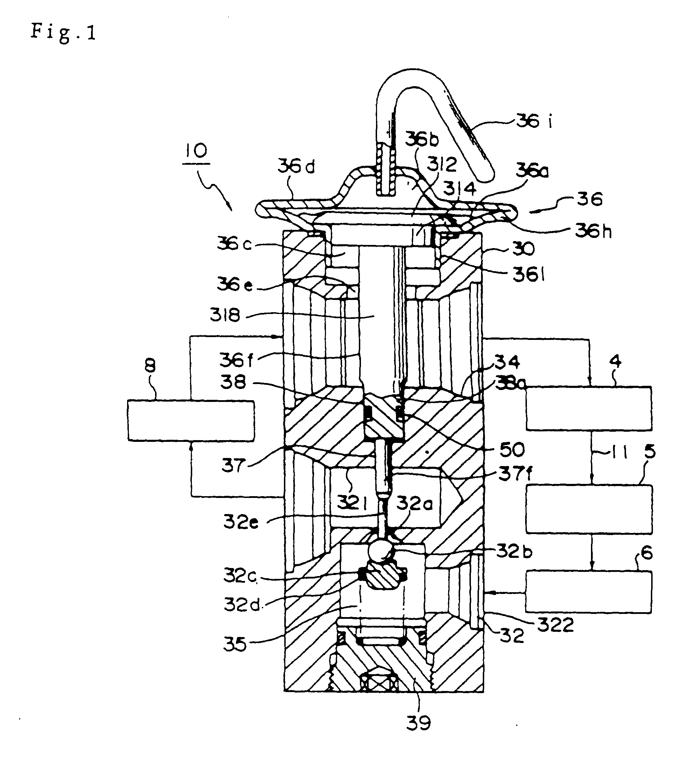

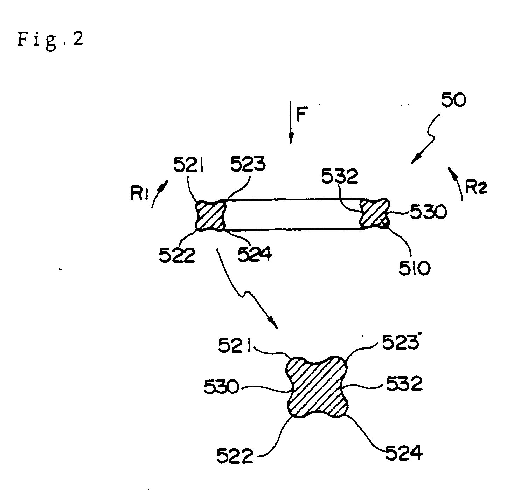

FIG. 1 is a vertical cross-sectional view showing one embodiment of a thermal expansion valve not falling within the scope of the present invention, and FIG. 2 is a cross-sectional view of the x-ring shown in FIG. 1.

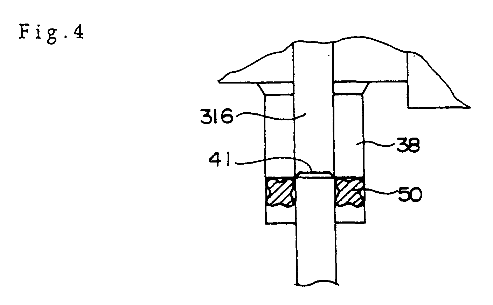

In FIG. 1, 50 shows an x-ring mounted on a rod member 36f, but the other structures are the same as FIG. 4, and the same reference numbers show the same member.

In FIG. 2, the cross section 510 of the x-ring 50 comprises of four lip seal portions 521, 522, 523 and 524 formed on the four ends of the x-ring.

Of the four lip seal portions, the two lip seal portions 521 and 522 positioned outwardly rubs against an outside member. In the present embodiment, lip seal portions 521 and 522 will rub against the valve means 30 of a large hole 38. However, torsion of the x-ring 50 caused by the torsion stress shown by arrows R₁ and R₂ occurring when pushed toward the arrow F direction in an inner wall 38a of the large hole 38 will be prevented since the x-ring will contact the other member by two lip seal portions placed separately.

In the same way, the inner peripheral of the x-ring 50 will be rubbed against a rod member 316, but by two lip seal portions 523 and 524, so the torsion of the x-ring will be prevented and leakage will not happen. Further, the leak caused from a seam formed on the ring will be solved.

As was explained above, the x-ring contacts the other members by a plurality of lip seal portions, so the seal will be achieved by only a small pressure to the lip portions.

Further, in the x-ring, the seams formed at the time of production will be positioned in the center concave portions 530 and 532, so they will not interfere with the other members. Therefore, the extra pressure added between the x-ring and the other member will reduce, and the resistance between the two will be small and at a stable rate.

Further, by the embodiment described above, the thermal expansion valve will have a first path where the liquid-phase refrigerant to be sent to the evaporator will pass, and a second path for the gas-phase refrigerant to pass from the evaporator to the compressor, and the rod member for controlling the opening of the orifice by operating the valve means will be inserted slidably inside a hole penetrating the center of the first path and the second path.

The x-ring will be equipped as a sealing member of the through hole and the rod member.

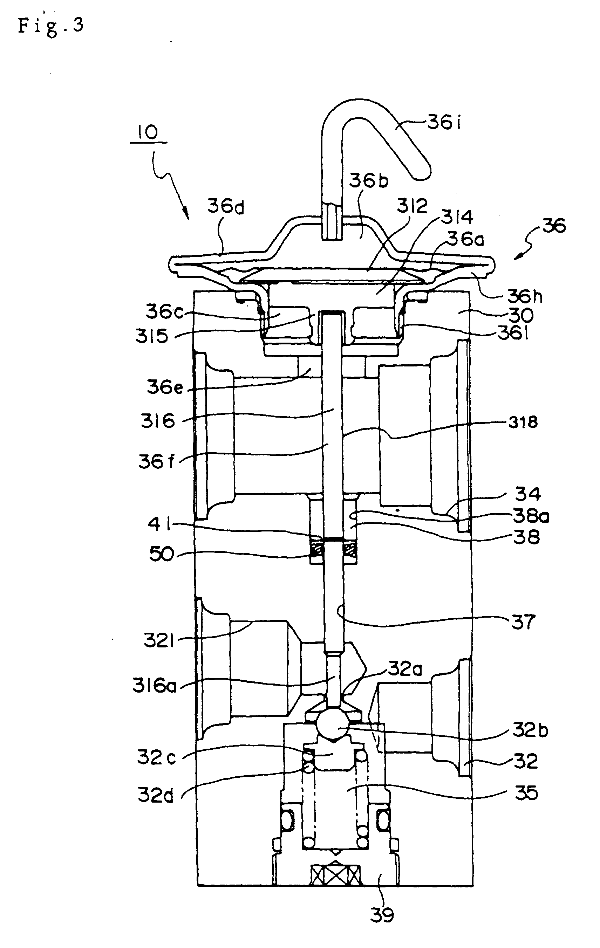

FIG. 3 is a cross-sectional view showing an embodiment of the present invention, and FIG. 4 is a cross-sectional view of the main portion of FIG. 3.

In FIG. 3, the valve body 30 of the thermal expansion valve 10 comprises a first path 32 and a second path 34, and an orifice 32a will be equipped inside the first path 32. The opening rate of the orifice 32a will be controlled by a spherical valve means 32b. The first path 32 and the second path 34 will be connected by through holes 37 and 38, and a thin shaft-type rod member 316 inserted slidably inside the through holes 37 and 38 will transmit the action of a diaphragm 36a to the valve means 32b.

A heat sensing portion 318 comprises of a large diameter stopper portion 312 having a heat sensing shaft 36f and a diaphragm 36a contacting its surface and acting as a receiver portion of the diaphragm 36a, a large diameter portion 314 contacting the back surface of the stopper portion 312 at one end and the center of the other end formed at a protrusion 315 and slidably inserted to a lower pressure activate chamber 36c, and a rod member 316 whose end surface is fit inside the protrusion 315 of the large diameter portion 314 and the other end surface contacting the valve body 32b and connected thereto in a monolithic structure.

Further, in the present embodiment, a body of the prior art thermal expansion valve is utilized as the valve body 30. The rod member 316 forming the heat sensing shaft 36f will be driven back and forth across the path 34 corresponding to the displacement of the diaphragm 36a of the power element portion 36, so clearances 37 and 38 connecting the path 321 and the path 34 along the rod member 316 will be formed. In order to seal this clearance, the x-ring to be fit to the outer peripheral of the rod member 316 will be positioned inside the large hole 38, so that the x-ring exists between the two paths. Even further, as is shown in the enlarged view of the large hole 38 of FIG. 4, a push nut 41 working as a self-locking nut is fixed onto the rod member 316 in a position inside the large hole 38 contacting the x-ring 50, so that the x-ring will not be moved by the force added thereto by the spring coil 32d and the refrigerant pressure inside the path 321 in the longitudinal direction (the direction where the power element 36 exists). As for the rod member 316, it is formed to have a small diameter compared to the ones used in the prior art thermal expansion valves (for example, 2.4 mm compared to the 5.6 mm of the rod of the prior art thermal expansion valve), so that it has a small heat transmission area or cross-sectional area, in order to prevent the occurrence of hunting phenomenon. Therefore, there is a possibility that said connection will be formed when the valve body is formed to have the same structure as the one used for prior art thermal expansion valves. In order to prevent this and to securely fix the x-ring, the push nut 41 is effective. The connection between the rod member 316 and valve means 32b is formed in the small diameter portion 316a, and passes the orifice 32a. In such structure the operation thereof is the same as the embodiment of FIG. 1.

In the present embodiment, the two lip seal portions 521 and 522 of the four lip seal portions of FIG. 2 formed outwardly will be rubbed against the inner wall 38a of the large hole 38. The x-ring will contact the other members by two separate lip seal portions, so torsion and deformation by the torsion stress shown by arrows R₁ and R₂ occurring when the x-ring is pushed in the inner wall 38a of the hole 38 in the arrow F direction will not happen. Therefore, leakage will be prevented. Of course, the leakage occurring by the seam formed in the ring will also be prevented.

Similarly, the inner peripheral of the x-ring 50 will be rubbed against the rod member 316, but torsion and deformation by the stress will not happen because it will contact the rod member by two lip seal portions 523 and 524.

As was explained above, the x-ring of the present embodiment contacts the other members by a plurality of lip seal portions, so the necessary pressure to the lip portions are small in order to achieve a seal.

Further, in the x-ring, the seams formed at the time of production will be positioned in the central concave portions 530 and 532, so they will not interfere with the other members. Therefore, the extra pressure added between the x-ring and the other member will reduce, and the resistance between the two members will be small and at a stable rate.

Therefore, the x-ring is suitable for a sealing member utilized in a rod member 316 having small diameters and operated by a small axis power.

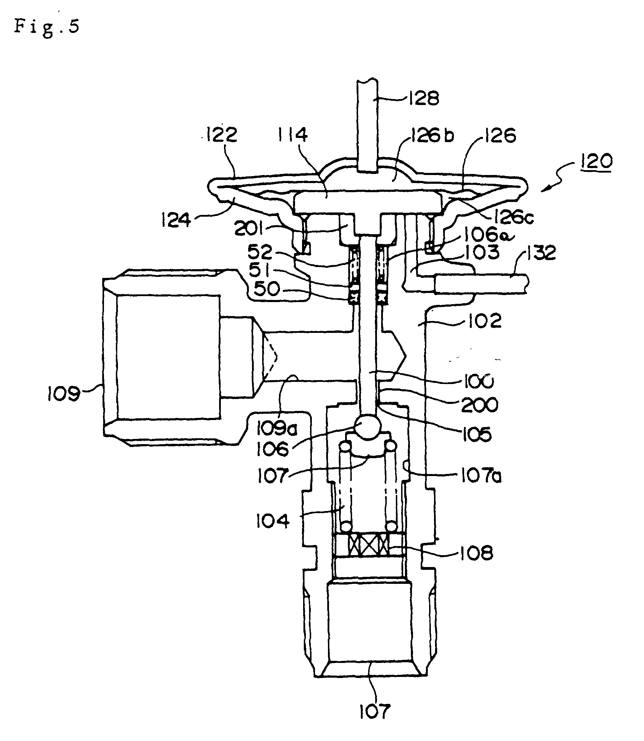

FIG. 5 shows a vertical cross-sectional view of another embodiment not falling within the scope of the present invention, and the basic structure thereof is shown in Japanese Patent Application Laid-Open No. H7-198230.

The drawing comprises a valve portion for decompressing a liquid-phase refrigerant having high pressure, and a power element 120 for controlling the valve opening rate of said valve portion.

The power element 120 includes a diaphragm 126 held and welded to the outer peripheral of an upper cover 122 and a lower cover 124, and said upper cover 122 and said lower cover 124 together with the diaphragm 126 constitute an upper pressure activate chamber 126b and a lower pressure activate chamber 126c.

The upper pressure activate chamber 126b is connected with the inside of a known heat sensing pipe (not shown) via a conduit 128. This heat sensing pipe is positioned in the exit portion of the evaporator in order to sense the temperature of the refrigerant near the exit of the evaporator, and converts the temperature to a pressure P1 which will be the pressure of the activate chamber 126b. When increased, said pressure P1 presses the diaphragm toward the lower direction, and opens the valve means 106.

On the other hand, a refrigerant pressure P2 of the exit of the evaporator is introduced to the pressure activate chamber 126c of the diaphragm 126 via a conduit 132. This pressure P2 together with the force from a bias spring 104 works to close the valve means 106.

That is, the amount of refrigerant flowing into the evaporator will be controlled so that the valve is opened widely when the overheat rate (the difference between the refrigerant temperature of the evaporator exit and the evaporation temperature is taken out, so it is the same as said pressure P1 - P2) is large, and the valve is somewhat closed when the overheat rate is small.

The valve portion comprises of an entrance 107 of a high pressure refrigerant and an exit 109 of a low pressure refrigerant and a valve body 102 having a pressure hole 103 for connecting a pressure conduit 132, the valve body 102 having a stopper portion 114 for limiting the displacement of the diaphragm to the lower direction and a rod member working as an activating shaft for transmitting the displacement of the diaphragm 126 to a valve means 106, wherein said valve means 106 is supported by a valve member 107 to contact and part from a valve opening 105. The valve member 107 is supported by a bias spring 104, and the bias spring 104 is set together with a plug 108 which works as an adjustment member for the adjustment of the bias force of the spring. The rod member 100 traverses through a low pressure path 109a and passes an orifice 200, having one end fixed by a stopper member 114 and the other end being fixed to the valve means 106 inside a high pressure path 107a.

Further, the valve body 102 has a concave 106a positioned in the upper direction of the low pressure path 109a on the same concentric circle as the rod member 100. An x-ring 50, a washer 51 and a compression spring 52 is mounted on the concave 106a, and the x-ring 50 is positioned between the rod member 100 and the valve body 102. Therefore, the x-ring 50 is pressed by the compression spring 52 so as to seal the opening of the lower pressure path 109a side of the concave 106a, and the lower pressure activate chamber 126c is kept airtight. That is, the x-ring is utilized as a sealing member, so leakage occurring by the seam or the torsion of the sealing member could be prevented, and the seal could be achieved without producing too much slide resistance. Further, in FIG. 5, 201 is a ring member for holding the compression spring. Therefore, as is shown in FIG. 5, in the state where the valve means 106 is separated by a predetermined distance from the valve opening 105, the liquid-phase refrigerant having high pressure and high temperature flowing in from the condenser to the entrance 107 of the high pressure path 107a will pass through the orifice 200 from the valve opening 105 into the lower pressure path 109a. Further, in the process of flowing to the lower pressure path 109a from the orifice 200, the liquid-phase refrigerant expands rapidly and becomes a refrigerant having low pressure and low temperature.

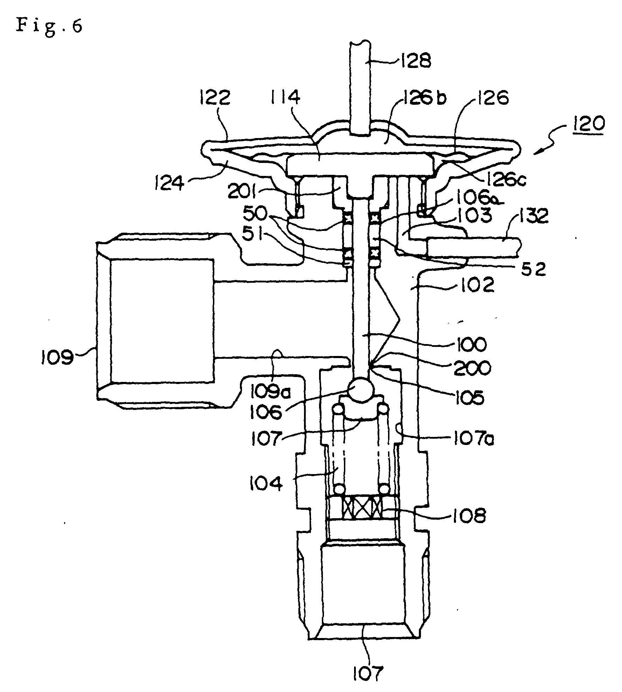

FIG. 6 shows yet another embodiment which is not within the scope of the present invention. The structure differing from FIG. 5 is that a washer 51 and a push 52 is utilized without using the compression spring. The other structures are the same as FIG. 5. In the embodiment shown in FIG. 6, the x-ring is also mounted as a sealing member to the rod member 100 of the concave 106a, so leakage occurring by the seam or the torsion of the sealing member could be prevented, and the seal could be achieved without producing too much slide resistance.

By the thermal expansion valve of the present invention, an x-ring is utilized as the sealing member of the rod member in a thermal expansion valve, so leakage of air by the seam or the torsion in the sealing member could be effectively prevented, and slide resistance could be reduced.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A thermal expansion valve comprising:
a valve body (30);
a high pressure path (32) and a low pressure path (34) mounted on the valve body (30) for flowing a refrigerant;
an orifice (32a) mounted inside the high pressure path (32)
a valve means (32b) contacting and parting from the orifice (32a); and
a rod member (316) mounted through the orifice (32a) for contacting and parting the valve means (32b) against the valve opening (105), the rod member (316) being mounted slidably inside a hole (37, 38) extending perpendicularly through the low pressure path (34) and connecting said high pressure path (32) and said low pressure path (34) , the hole (37, 38) including a small diameter hole (37) and a large diameter hole (38), the large diameter hole (38) having a diameter larger than that of the small diameter hole (37),
**characterized in that** the rod member (316) further comprises an x-ring (50), the x-ring (50) being equipped between the rod member (316) and the large diameter hole (38), the rod member (316) having a constant diameter which is substantially equal to the diameter of the small diameter hole (37).

2. The thermal expansion valve of claim 1, **characterized in that** the rod member (316; 100) further comprises a push nut (41) in a position inside the large diameter hole (38) and contacting the x-ring (50).

3. The thermal expansion valve of claims 1 or 2, **characterized in that** it further comprises:
a power element portion (36) mounted on the valve body (30); and
a diaphragm (36a) forming one sealed chamber (36b) defined inside the power element portion (36) and another sealed chamber (36c),
the rod member (316) controlling the opening degree of the valve means (32b) by a displacement of the diaphragm (36a) occurring by the pressure difference of the sealed chambers (36b, 36c);
wherein the rod member (316) controls the flow rate of the refrigerant by the opening of the valve (32b).

4. The thermal expansion valve according to one or more of claims 1-3, **characterized in that** it further comprises:
an evaporator (8) receiving a liquid-phase refrigerant from the high pressure path (32); and
a compressor (4) receiving a gas-phase refrigerant from the evaporator (8) through the low pressure path (34),
the rod member (316) working as a heat sensing shaft (36f) for sensing the temperature of the gas-phase refrigerant and for driving the valve means (32b) by the displacement of the diaphragm (36a).

5. The thermal expansion valve according to one or more of claims 1-4, **characterized in that** the x-ring (50) comprises four lip seal portions (521, 522, 523, 524) two of which engaging the through hole (37, 38) and two of which engaging the rod member (316).

6. The thermal expansion valve according to one or more of claims 1-4, **characterized in that** x-ring (50) further includes respective central concave portions (530, 532) between the lip seal portions (521, 522, 523, 524), the seams formed at the time of production of the x-ring (50) being positioned in the central concave portions (530, 532).

## Patentansprüche

1. Ein thermisches Entspannungsventil, das folgendes umfasst:
einen Ventilkörper (30);
einen Hochdruckpfad (32) und einen Niederdruckpfad (34), die am Ventilkörper (30) montiert sind, um ein Kühlmittel durchströmen zu lassen;
eine Öffnung (32a), die in dem Hochdruckpfad (32) montiert ist;
ein Ventilmittel (32b), das die Öffnung (32a) berührt und. sich davon trennt; und
ein Stangenglied (316), das durch die Öffnung (32a) montiert ist, um zu bewirken, dass das Ventilmittel (32b) die Ventilöffnung (105) berührt und sich davon trennt, wobei das Stangenglied (316) in einem Loch (37, 38), das sich senkrecht durch den Niederdruckpfad (34) erstreckt und den Hochdruckpfad (32) und den Niederdruckpfad (34) verbindet, gleitend montiert ist, wobei das Loch (37, 38) ein Loch (37) kleinen Durchmessers und ein Loch (38) großen Durchmessers einschließt, wobei das Loch (38) großen Durchmessers einen Durchmesser aufweist, der größer ist als der des Lochs (37) kleinen Durchmessers,
**dadurch gekennzeichnet, dass** das Stangenglied (316) ferner einen X-Ring (50) umfasst, wobei der X-Ring (50) zwischen dem Stangenglied (316) und dem Loch (38) großen Durchmessers vorgesehen ist, wobei das Stangenglied (316) einen konstanten Durchmesser aufweist, der mit dem Durchmesser des Lochs (37) kleinen Durchmessers im wesentlichen gleich ist.

2. Das thermische Entspannungsventil nach Anspruch 1, **dadurch gekennzeichnet, dass** das Stangenglied (316; 100) ferner eine Schubmutter (41) umfasst, die sich in einer Position in dem Loch (38) großen Durchmessers befindet und den X-Ring (50) berührt.

3. Das thermische Entspannungsventil nach Anspruch 1 oder 2, **dadurch gekennzeichnet, dass** es ferner folgendes umfasst:
einen Leistungselementabschnitt (36), der am Ventilkörper (30) montiert ist; und
eine Membran (36a), die eine abgedichtete Kammer (36b), die innerhalb des Leistungselelementabschnitts (36) definiert ist, und eine andere abgedichtete Kammer (36c) bildet,
wobei das Stangenglied (316) den Öffnungsgrad des Ventilmittels (32b) durch eine Verschiebung der Membran (36a) steuert, die durch die Druckdifferenz der abgedichteten Kammern (36b, 36c) erfolgt;
worin das Stangenglied (316) die Durchflussgeschwindigkeit des Kühlmittels durch die Öffnung des Ventils (32b) steuert.

4. Das thermische Entspannungsventil nach einem oder mehreren der Ansprüche 1 - 3, **dadurch gekennzeichnet, dass** es ferner folgendes umfasst:
einen Verdampfer (8), der ein Flüssigphasen-Kühlmittel von dem Hochdruckpfad (32) empfängt; und
einen Kompressor (4), der durch den Niederdruckpfad (34) ein Gasphasen-Kühlmittel von dem Verdampfer (8) empfängt,
wobei das Stangenglied (316) als ein wärmefühlender Stab (36f) zum Fühlen der Temperatur des Gasphasen-Kühlmittels und zum Ansteuern des Ventilmittels (32b) durch die Verschiebung der Membran (36a) arbeitet.

5. Das thermische Entspannungsventil nach einem oder mehreren der Ansprüche 1 - 4, **dadurch gekennzeichnet, dass** der X-Ring (50) vier Lippendichtungsabschnitte (521, 522, 523, 524) umfasst, von denen zwei in das durchgehende Loch (37, 38) eingreifen und zwei in das Stangenglied (316) eingreifen.

6. Das thermische Entspannungsventil nach einem oder mehreren der Ansprüche 1 - 4, **dadurch gekennzeichnet, dass** der X-Ring (50) ferner jeweilige zentrale konkave Abschnitte (530, 532) zwischen den Lippendichtungsabschnitten (521, 522, 523, 524) einschließt, wobei die zur Zeit der Herstellung des X-Rings (50) gebildeten Nahten in den zentralen konkaven Abschnitten (530, 532) positioniert sind.

## Revendications

1. Clapet de détente thermique comportant :
un corps de clapet (30),
un trajet haute pression (32) et un trajet basse pression (34) montés sur le corps de clapet (30) pour l'écoulement d'un réfrigérant,
un orifice (32a) monté à l'intérieur du trajet haute pression (32),
des moyens formant clapet (32b) venant en contact avec l'orifice (32a) et s'éloignant de celui-ci, et
un élément formant tige (316) monté à travers l'orifice (32a) pour venir en contact avec les moyens formant clapet (32b) contre l'ouverture de clapet (105) et s'éloigner de celle-ci, l'élément formant tige (316) étant monté de manière coulissante à l'intérieur d'un trou (37, 38) s'étendant perpendiculairement à travers le trajet basse pression (34) et reliant ledit trajet haute pression (32) et ledit trajet basse pression (34), le trou (37, 38) incluant un trou de petit diamètre (37) et un trou de grand diamètre (38), le trou de grand diamètre (38) ayant un diamètre plus grand que celui du trou de petit diamètre (37),
**caractérisé en ce que** l'élément formant tige (316) comporte en outre un anneau en x (50), l'anneau en x (50) étant agencé entre l'élément formant tige (316) et le trou de grand diamètre (38), l'élément formant tige (316) ayant un diamètre constant qui est pratiquement égal au diamètre du trou de petit diamètre (37).

2. Clapet de détente thermique selon la revendication 1, **caractérisé en ce que** l'élément formant tige (316) ; 100) comporte de plus un écrou de poussée (41) dans une position située à l'intérieur du trou de grand diamètre (38) et en contact avec l'anneau en x (50).

3. Clapet de détente thermique selon la revendication 1 ou 2, **caractérisé en ce qu'**il comporte de plus :
une partie d'élément de puissance (36) montée sur le corps de clapet (30), et
une membrane (36a) formant une chambre étanche (36b) définie à l'intérieur de la partie d'élément de puissance (36) et une autre chambre étanche (36c),
l'élément formant tige (316) commandant le degré d'ouverture des moyens formant clapet (32b) par un déplacement de la membrane (36a) survenant par ladite différence de pression des chambres étanches (36b, 36c),
dans lequel l'élément formant tige (316) commande le débit du réfrigérant par l'ouverture du clapet (32b).

4. Clapet de détente thermique selon l'une des revendications 1 à 3, **caractérisé en ce qu'**il comporte de plus :
un évaporateur (8) recevant un réfrigérant en phase liquide provenant du trajet haute pression (32), et
un compresseur (4) recevant un réfrigérant en phase gazeuse provenant de l'évaporateu (8) à travers le trajet basse pression (34),
l'élément formant tige (316) agissant comme un arbre de détection de température (36f) pour détecter la température du réfrigérant en phase gazeuse et pour entraîner les moyens formant clapet (32b) par le déplacement de la membrane (36a).

5. Clapet de détente thermique selon l'une des revendications 1 à 4, **caractérisé en ce que** l'anneau en x (50) comporte quatre parties d'étanchéité formant lèvre (521, 522, 523, 524) dont deux sont en contact avec le trou traversant (37, 38) et dont deux sont en contact avec l'élément formant tige (316).

6. Clapet de détente thermique selon l'une des revendications 1 à 4, **caractérisé en ce que** l'anneau en x (50) comporte de plus des parties concaves centrales respectives (530, 532) situées entre les parties d'étanchéité formant lèvre (521, 522, 523, 524), les bavures formées au moment de la production de l'anneau en x (50) étant positionnées dans les parties concaves centrales (530, 532).
